(19) Europäisches Patentamt
European Patent Office
Office européen des brevets

(11) **EP 3 621 026 B1**

(12) **FASCICULE DE BREVET EUROPEEN**

(45) Date de publication et mention
de la délivrance du brevet:
**20.07.2022 Bulletin 2022/29**

(21) Numéro de dépôt: **19194454.5**

(22) Date de dépôt: **29.08.2019**

(51) Classification Internationale des Brevets (IPC):
***G06T 3/40*** *(2006.01)*

(52) Classification Coopérative des Brevets (CPC):
**G06T 3/4038**

(54) **PROCÉDÉ DE RECONSTRUCTION D'UNE IMAGE D'EMPREINTE À PARTIR DE PARTIES D'IMAGE**

VERFAHREN ZUM REKONSTRUIEREN EINES ABDRUCKBILDES AUS BILDTEILEN

METHOD FOR RECONSTRUCTING AN IMPRINT IMAGE FROM IMAGE PORTIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.09.2018 FR 1858016**

(43) Date de publication de la demande:
**11.03.2020 Bulletin 2020/11**

(73) Titulaire: **Idemia Identity & Security France**
**92400 Courbevoie (FR)**

(72) Inventeurs:
• **NIAF, Emilie**
**92100 COURBEVOIE (FR)**
• **GIRARD, Fantin**
**92400 COURBEVOIE (FR)**

(74) Mandataire: **Idemia**
**2, place Samuel de Champlain**
**92400 Courbevoie (FR)**

(56) Documents cités:
**US-A1- 2011 044 513**

• **S Shah ET AL: "Fingerprint Mosaicing Using Thin Plate Splines", , 1 janvier 2005 (2005-01-01), XP055570009, Extrait de l'Internet: URL:http://citeseerx.ist.psu.edu/viewdoc/download?doi=10.1.1.423.427&rep=rep1&type=pdf [extrait le 2019-03-15]**
• **ROSS: "Image versus faeture mosaicing: A case study in fingerprints", SPIE, PO BOX 10 BELLINGHAM WA 98227-0010 USA, 2006, XP040223932,**
• **HEESEUNG CHOI ET AL: "Mosaicing Touchless and Mirror-Reflected Fingerprint Images", IEEE TRANSACTIONS ON INFORMATION FORENSICS AND SECURITY, IEEE, PISCATAWAY, NJ, US, vol. 5, no. 1, 1 mars 2010 (2010-03-01), pages 52-61, XP011328949, ISSN: 1556-6013, DOI: 10.1109/TIFS.2009.2038758**
• **DINCA LAVINIA MIHAELA ET AL: "The Fall of One, the Rise of Many: A Survey on Multi-Biometric Fusion Methods", IEEE ACCESS, vol. 5, 2017, pages 6247-6289, XP011649319, DOI: 10.1109/ACCESS.2017.2694050**

EP 3 621 026 B1

## Description

L'invention concerne le domaine des procédés de reconstruction d'une image d'empreinte à partir de parties d'image(s).

ARRIERE PLAN DE L'INVENTION

Il est bien connu d'identifier et d'authentifier une personne grâce à ses empreintes digitales, qui sont uniques.

Pour comparer deux empreintes digitales, on compare classiquement des points caractéristiques des empreintes digitales, tels que des minuties qui correspondent par exemple à la fin d'une crête ou à la division en deux d'une crête (bifurcation).

Les dimensions moyennes d'une empreinte digitale tiennent dans un rectangle de 1.5cm sur 1cm, soit dans une surface de 1.5cm$^2$. On compte environ 80 minuties dans une telle surface.

Un capteur destiné à acquérir une image d'empreinte représentative de l'empreinte digitale, par exemple un capteur optique, présente typiquement une surface d'acquisition formant un rectangle de 2cm par 2.5cm, soit une surface d'acquisition de 5cm$^2$.

La reconnaissance de l'image d'empreinte utilise alors un algorithme de reconnaissance qui compare le jeu de minuties de l'image d'empreinte avec des jeux de minuties de référence.

Cependant, dans certains dispositifs électroniques, notamment dans des dispositifs mobiles, le capteur a une taille réduite. C'est par exemple le cas des capteurs digitaux sur *smartphone* ou sur carte à puce. La surface d'acquisition d'un tel « minicapteur » est typiquement inférieure au centimètre carré.

L'acquisition d'une image d'empreinte complète sur un capteur de taille réduite requiert l'acquisition de plusieurs parties d'image se chevauchant et recouvrant complètement l'empreinte digitale, chaque partie d'image étant représentative d'une portion de l'empreinte digitale.

Dans chaque partie d'image produite par un tel capteur, on retrouve entre deux et cinq minuties seulement. Ainsi, les algorithmes de reconnaissance « classiques » permettant de comparer entre elles deux images d'empreinte complètes sont très peu performants dans le cas de parties d'image.

On tente donc de reconstituer l'image d'empreinte complète à partir des parties d'image(s). On parle parfois de *stitching* ou mosaïquage pour évoquer une telle reconstruction.

Cependant, la petite taille du capteur introduit des déformations dans les parties d'image et donc dans l'image d'empreinte reconstituée. En effet, l'utilisateur, pour acquérir l'ensemble de son empreinte digitale, va appuyer plusieurs fois son doigt sur des zones différentes ce qui complique le recollement des parties d'image adjacentes. Ces déformations dégradent la qualité de la reconstruction de l'image d'empreinte et donc la précision et la fiabilité de la reconnaissance de l'empreinte digitale.

L'état de l'art pertinent est divulgué dans : Shah et al., "Fingerprint Mosaicing Using Thin Plate Splines", The biometric consortium conférence, 2005.

OBJET DE L'INVENTION

L'invention a pour objet d'améliorer la reconnaissance d'une empreinte papillaire à partir de parties d'image représentatives chacune d'une partie de l'empreinte papillaire.

RESUME DE L'INVENTION

En vue de la réalisation de ce but, on propose un procédé de reconstruction d'au moins une image d'empreinte, représentative d'une empreinte papillaire, à partir d'un ensemble de plus de deux parties d'image acquises grâce à au moins un capteur, le procédé de reconstruction comportant les étapes, réalisées par au moins une unité électrique de traitement, de :

- extraire de chaque partie d'image de l'ensemble de parties d'image un jeu de points d'intérêts locaux, ledit jeu de points d'intérêts locaux caractérisant la partie d'image et, pour chaque point d'intérêt local, calculer un vecteur descripteur qui caractérise ledit point d'intérêt local ;
- pour chaque couple de deux parties d'image, évaluer à partir des jeux de points d'intérêts locaux et des vecteurs descripteurs desdites deux parties d'image un score d'association représentatif d'une probabilité que les deux parties d'image soient contiguës sur l'image d'empreinte ;
- assembler les parties d'image d'un meilleur couple, dont le score d'association est le plus élevé, pour former un fragment assemblé ;
- réitérer les étapes ci-dessus en remplaçant à chaque fois, dans l'ensemble de parties d'image, les deux parties d'image du meilleur couple par le fragment assemblé, jusqu'à ce que tous les scores d'association des couples restants soient inférieurs ou égaux à un seuil prédéterminé, et produire ainsi une carte d'assemblage des parties d'image ;
- fusionner les parties d'image selon la carte d'assemblage obtenue au cours des étapes d'assemblage pour reproduire l'image d'empreinte.

Le procédé de reconstruction selon l'invention permet de reproduire très précisément et avec une grande fiabilité l'image d'empreinte à partir des parties d'image. L'intégralité de l'image d'empreinte est donc disponible, de sorte qu'il est possible d'utiliser un algorithme de reconnaissance qui compare des images d'empreinte complètes. On améliore ainsi la précision de la reconnaissance, puisqu'une image d'empreinte complète comporte plus de minuties et de points d'intérêt locaux qu'une partie d'image. On réduit les redondances d'information et donc l'espace de stockage de données, ce qui est déterminant sur une technologie embarquée. Comme la reconnaissance est réalisée sur une seule image, on diminue le temps nécessaire à la reconnaissance d'une empreinte.

On note de plus que la reconstruction est réalisée à partir d'un traitement en local. La reconstruction est par conséquent plus robuste aux déformations et aux occlusions.

La stratégie itérative d'agrégation des parties d'empreinte sur la base du meilleure score seuillé, avec mise au rebus progressif des couples à faible score, produit un certain nombre d'effets techniques avantageux, et, par exemple, réduit le nombre de calculs nécessaires et les distorsions.

On note par ailleurs que le procédé de reconstruction selon l'invention ne requiert pas d'empreinte modèle stockée préalablement sur laquelle sont recalées les empreintes partielles. On réduit donc à nouveau l'espace de stockage nécessaire.

On propose aussi une unité électrique de traitement, dans laquelle est mis en œuvre un procédé de reconstruction tel que celui qui vient d'être décrit.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés, parmi lesquels :

- la figure 1 représente des étapes du procédé de reconstruction selon l'invention ;
- la figure 2 représente une étape d'association et une étape de recalage de deux parties d'image, mises en œuvre dans le procédé de reconstruction selon l'invention ;
- la figure 3 est un diagramme qui illustre une étape d'assemblage du procédé de reconstruction selon l'invention ;
- la figure 4 représente des tableaux qui illustrent l'étape d'assemblage ;
- la figure 5 représente des parties d'image et des transformées en distance calculées au cours d'une étape finale de fusion ;
- la figure 6 représente une partie d'image source et une partie d'image corrigée par une égalisation d'histogramme adaptatif et par une détection du fond ;
- la figure 7 représente une portion d'une image d'empreinte reconstruite par le procédé de reconstruction selon l'invention, et une portion d'une image d'empreinte reconstruite en utilisant une méthode de fusion par moyenne ;
- la figure 8 représente une portion d'une image d'empreinte reconstruite par le procédé de reconstruction selon l'invention, et une portion d'une image d'empreinte reconstruite en utilisant une méthode de fusion par médiane ;
- la figure 9 représente une portion d'une image d'empreinte reconstruite par le procédé de reconstruction selon l'invention, et une portion d'une image d'empreinte reconstruite en utilisant une méthode de fusion par moyenne pondérée par la distance aux frontières de recollement.

DESCRIPTION DETAILLEE DE L'INVENTION

Le procédé de reconstruction selon l'invention est destiné à reconstruire une image d'empreinte, représentative d'une empreinte papillaire, à partir d'un ensemble de parties d'image acquises grâce à un capteur.

L'empreinte papillaire est ici une empreinte digitale, mais pourrait être une empreinte différente, par exemple une empreinte de la paume de la main.

Le capteur est ici un capteur optique, mais un autre type de capteur pourrait être utilisé : capteur thermique, capteur à ultrasons, etc. Il serait aussi possible d'utiliser plusieurs capteurs pour acquérir les parties d'image.

Le capteur a une surface de détection réduite : il s'agit d'un « minicapteur », comme évoqué plus tôt dans cette description.

Le procédé de reconstruction comporte un certain nombre d'étapes qui sont toutes réalisées par une unité électrique de traitement. Par « unité électrique de traitement », on entend tout type d'équipement électrique fixe ou mobile qui comprend un ou plusieurs composants de traitement (microcontrôleur, processeur, FPGA, DSP, etc.) adaptés à exécuter des instructions d'un programme pour réaliser les tâches qui lui sont dédiées (et, notamment, pour mettre en œuvre au moins partiellement le procédé de reconstruction selon l'invention). On note qu'il est possible de réaliser ces étapes non pas dans une mais dans plusieurs unités électriques de traitement, possiblement connectées les unes aux autres par tout type de connexion (filaire, sans-fil, en réseau, etc.). Bien sûr, l'unité de traitement est capable d'acquérir les parties d'image produites par le capteur.

L'objectif du procédé de reconstruction selon l'invention est de concaténer l'information issue des parties d'image en une seule image de plus grande surface selon une stratégie d'agrégation et de fusion des parties d'image afin de :

- reconstruire l'intégralité de l'information présente dans l'empreinte digitale et guider l'acquisition (ou *enrolement*) pour s'assurer que l'intégralité de l'empreinte est acquise ;
- améliorer la précision du *matching,* puisqu'une image de plus grande dimension présentera a priori plus de minuties et de points caractéristiques;
- réduire les redondances d'information, et donc l'espace de stockage des données, ce qui est déterminant sur des technologies embarquées;

- diminuer le temps de *matching*: on ne *matchera* qu'une seule grande image au lieu de plusieurs petites.

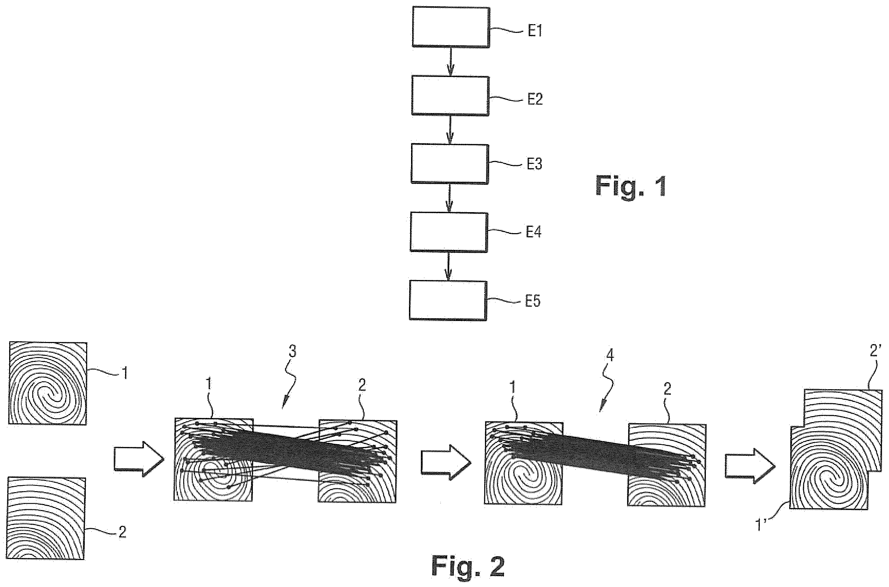

En référence à la figure 1, le procédé de reconstruction selon l'invention consiste tout d'abord à extraire de chaque partie d'image de l'ensemble des parties d'image un jeu de points d'intérêts locaux qui caractérisent la partie d'image (étape E1). On extrait ainsi l'information pertinente de chaque partie d'image.

Dans chaque partie d'image, le jeu de points d'intérêts locaux est défini comme suit:

$\{(x,y,f)\}_{(x,y)\in}$ frag.

Le couple $(x,y)$ forme les coordonnées de l'un des points dans la partie d'image. Pour chaque point d'intérêt local, un vecteur descripteur $f$ est calculé et est associé au point d'intérêt local. Le vecteur descripteur $f$ caractérise ledit point d'intérêt local en décrivant la structure locale de la zone environnant le point d'intérêt local en question.

On note que, pour chaque jeu de points d'intérêts locaux, l'extraction du jeu de points d'intérêts locaux et le calcul des vecteurs descripteurs peuvent être fait simultanément ou bien successivement.

Le jeu de points d'intérêts locaux permet de caractériser localement la portion d'empreinte visible dans la partie d'image. Il peut par exemple s'agir d'une caractérisation des points caractéristiques ou singuliers de l'empreinte c'est-à-dire d'une caractérisation :

- d'un motif global (noyau ou centre de l'empreinte, delta, vallées, crêtes formant une boucle, un tourbillon, une arche.., ...) et/ou
- d'une minutie (bifurcation, lac, terminaison, ile ou îlot) et/ou
- des aléas présents dans la partie d'image.

On utilisera par exemple ici un descripteur SIFT (pour *Scale-Invariant Feature Transform,* que l'on peut traduire par « transformation de caractéristiques visuelles invariante à l'échelle ») ou un descripteur SURF (pour *Speeded-Up Robust Features,* que l'on peut traduire par « caractéristiques robustes accélérées »). Ces descripteurs sont particulièrement efficaces pour extraire des minuties sur des images d'empreinte complètes (de taille entière) et sur des parties d'image.

Le procédé de reconstruction comprend en outre, suite à l'étape extraction, une étape d'association.

L'étape d'association consiste tout d'abord à associer deux par deux les parties d'image en évaluant une proximité entre les jeux de points caractéristiques des parties d'image (étape E2).

Cette étape d'association est réalisée de la manière suivante. Pour chaque couple de deux parties d'image, on évalue à partir des jeux de points d'intérêts locaux et des vecteurs descripteurs desdits deux parties d'image un score d'association représentatif d'une probabilité que les deux parties d'image soient contiguës sur l'image d'empreinte. En référence à la figure 2, on définit K1 et K2 comme étant deux jeux de points caractéristiques issus de deux parties d'image 1 et 2. Chaque partie d'image 1, 2 a pour taille 9mmx9mm, avec une résolution de 500dpi.

On cherche dans un premier temps à trouver les points de K1 qui ont des associés dans K2.

Pour cela, on pourra mettre en œuvre un algorithme de point *wise matching* pour comparer K1 et K2. L'algorithme de *point wise matching* calcule notamment une distance euclidienne entre des vecteurs descripteurs des points caractéristiques. Puis, une procédure de nettoyage des mauvaises associations pourra être mise en œuvre, par exemple basée sur la régularité du champ de déformation.

On note que, pour réaliser l'association, d'autres approches peuvent être utilisées, et notamment une approche d'appariement au plus proche voisin avec un seuil de distance maximale.

Une fois les couples de jeux de points (et donc les parties d'image) associés, l'étape d'association consiste à réaliser un recalage pour recaler les parties d'image associées deux par deux (étape E3).

Le recalage met ici en œuvre une transformation rigide dont on peut estimer les poids avec un algorithme de type RANSAC (pour *RANdom SAmple Consensus*) ou avec un algorithme de type ICP (pour *Iterative Closest Point*). Il serait aussi possible d'estimer une homographie ou bien une transformation non rigide de type TPS (pour *Thin-Plate Splines)*.

Le recalage permet d'obtenir des parties d'image à la même échelle, chaque partie d'image présentant des dimensions et une orientation qui correspondent aux dimensions et à l'orientation effective de la portion d'empreinte associée dans l'empreinte digitale (et dans l'image d'empreinte à reconstruire).

On illustre ce qui vient d'être dit à l'aide de la figure 2. Les points sont associés via l'association 3, au sens du plus proche voisin. Puis, la procédure de nettoyage est mise en œuvre, de manière à obtenir l'association 4. Les parties d'image 1, 2, sont alors recalées par homographie pour obtenir les parties d'image 1' et 2' associées et recalées.

Le procédé de reconstruction consiste ensuite, pour chaque couple de deux parties d'image, à évaluer à partir des jeux de points caractéristiques desdits deux parties d'image un score d'association représentatif d'une probabilité que les deux parties d'image soient contiguës sur l'image d'empreinte.

Ici, le score d'association d'un couple de deux parties d'image est égal au nombre de points appariés des deux jeux de points caractéristiques des deux parties d'image. On aurait aussi pu définir le score d'association de manière différente, par exemple comme étant égal à la somme des scores de chaque association de points.

Avantageusement et optionnellement, on prétraite les parties d'images par une correction d'illumination, pour les rendre plus homogènes, et par une détection de fond et d'artefacts d'acquisition, pour éviter de fusionner des pixels non informatifs. Ces opérations ont pour effet d'obtenir une image « homogène » car la même correction est appliquée à toutes les images quel que soit leur capteur d'origine. On crée une image « réaliste » puisqu'on ne fusionne pas avec du fond. On obtient moins de variabilité dans les images à traiter.

On met alors en œuvre l'assemblage des parties d'image (étape E4). L'assemblage des parties d'image utilise un processus itératif.

Ce processus itératif démarre à partir de l'ensemble de parties d'image qui a été évoqué. Les parties d'image sont recalées deux par deux, et un score est associé à chaque couple de deux parties d'image.

On assemble alors les parties d'image du « meilleur couple », dont le score est le plus élevé, pour former un fragment assemblé.

Le fragment assemblé constitue une fusion temporaire des deux parties d'image du meilleur couple.

Puis, on réitère les étapes d'extraction des points caractéristiques, d'évaluation du score d'association et d'assemblage, en remplaçant à chaque fois, dans l'ensemble de parties d'image, les deux parties d'image du meilleur couple par le fragment assemblé.

Pour chaque fragment assemblé, qui forme une partie d'image nouvellement créée, les points caractéristiques sont à nouveau extraits « de zéro » : il n'y a pas de fusion des points caractéristiques.

On réitère de la sorte les étapes d'extraction des points caractéristiques, d'évaluation du score d'association et d'assemblage, jusqu'à ce que tous les scores d'association des couples restants soient inférieurs ou égaux à un seuil prédéterminé. Le seuil prédéterminé est par exemple égal à 25 (qui correspond dans notre cas au nombre minimum de points associés entre deux parties d'image).

On remarque qu'afin d'éviter de créer des images présentant des artefacts (zones floues, mauvais alignement des crêtes...), une carte de corrélation entre les images à aligner est calculée avant chaque fusion. Si les valeurs de celle-ci dépassent un seuil d'acceptation, les images ne sont pas recalées et le score d'alignement est arbitrairement remis à 0 dans le tableau des scores avant de poursuivre le processus de regroupement.

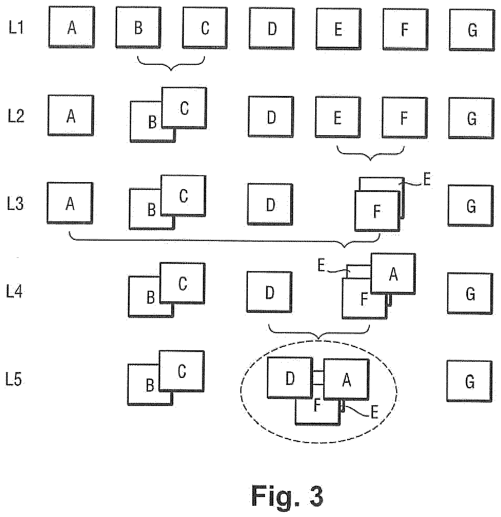

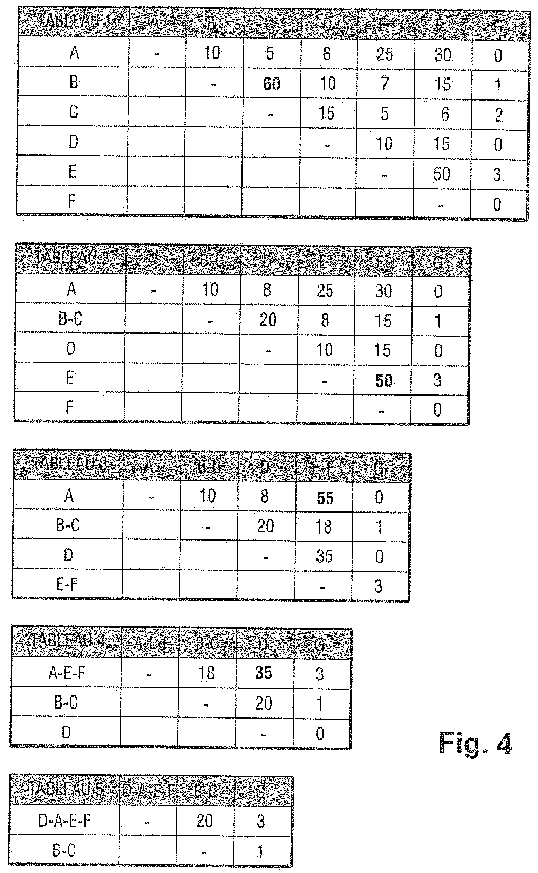

On illustre ce qui vient d'être dit en référence aux figures 3 et 4.

A l'initialisation du processus itératif, on est en présence, sur la ligne L1 de la figure 3, de sept parties d'image A, B, C, D, E, F, G.

Les scores d'association sont indiqués dans le tableau 1 de la figure 4.

Le couple des parties d'image B et C présente le score d'association le plus élevé (égal à 60) et est donc le meilleur couple. Les parties d'image B et C sont assemblées pour former un fragment assemblé B-C (voir la ligne L2 de la figure 3). Le fragment assemblé B-C remplace alors les parties d'image B et C dans l'ensemble de parties d'image (pour la mise en œuvre du processus itératif d'assemblage).

Les scores d'association sont alors estimés à nouveau, en utilisant le fragment assemblé B-C à la place des parties d'image B et C : voir le tableau 2 de la figure 4.

On voit dans le tableau 2 que le meilleur couple est le couple E, F. Les parties d'image E et F sont assemblées pour former un fragment assemblé E-F (voir la ligne L3). Le fragment assemblé E-F remplace alors les parties d'image E et F dans l'ensemble de parties d'image.

Les scores d'association sont alors estimés à nouveau, en utilisant le fragment assemblé E-F à la place des parties d'image E et F : voir le tableau 3 de la figure 4.

On voit dans le tableau 3 que le meilleur couple est le couple E-F, A. Le fragment assemblé E-F et la partie d'image A sont assemblés pour former un fragment assemblé A-E-F (voir la ligne L4 de la figure 3). Le fragment assemblé A-E-F remplace alors la partie d'image A et le fragment assemblé E-F dans l'ensemble de parties d'image.

Les scores d'association sont alors estimés à nouveau, en utilisant le fragment assemblé A-E-F à la place de la partie d'image A et du fragment assemblé E-F : voir le tableau 4 de la figure 4.

On voit dans le tableau 4 que le meilleur couple est le couple A-E-F, D. Le fragment assemblé A-E-F et la partie d'image D sont assemblés pour former un fragment assemblé D-A-E-F (voit la ligne L5 de la figure 3). Le fragment assemblé D-A-E-F remplace alors le fragment assemblé A-E-F et la partie d'image D dans l'ensemble de parties d'image.

Les scores d'association sont alors estimés à nouveau, en utilisant le fragment assemblé D-A-E-F à la place des fragments A-E-F et D : voir le tableau 5 de la figure 4.

On voit dans le tableau 5 que tous les scores d'association des couples restants sont inférieurs ou égaux au seuil prédéterminé (égal à 25). Le processus itératif s'achève donc.

On a donc assemblé, à chaque itération, les deux parties d'image ou la partie d'image et le fragment assemblé ou les deux fragments assemblés, qui présentent le meilleur score d'association.

Avantageusement et optionnellement, au moment de la création de chaque fragment assemblé, on vérifie l'absence de distorsions locales sur le fragment assemblé en utilisant une mesure de corrélation locale. Cette opération a pour effet d'éviter d'avoir des fragments assemblés avec un bon score d'appariement des points d'intérêt, mais qui seraient recalés malgré tout avec des distorsions.

On produit alors une carte d'assemblage des parties d'image, qui définit les positions relatives des parties d'image pour reproduire l'image d'empreinte. Bien sûr, par « carte », on entend tout type d'« objet » qui permet de définir les positions relatives des parties d'image: véritable carte, paramètres des transformations, tableau de coordonnées etc.

On note que, dans la littérature, le mosaïquage d'images est principalement utilisé dans le cadre de la reconstruction d'images de panorama de paysage, pour laquelle il est nécessaire que l'aspect global de l'image reconstruite soit esthétique. Au contraire, la reconstruction d'images d'empreinte nécessite que les détails soient préservés et que l'empreinte conserve toute l'information locale nécessaire à son utilisation.

Par ailleurs, dans les prises de vue d'un panorama, on dispose en général d'un a priori sur l'ordonnancement des images (elles se suivent de droite à gauche ou de gauche à droite), le recouvrement entre deux images successive est de l'ordre de 30% et, généralement la frontière de recollement des images est verticale. Ces a priori ne sont pas disponibles dans le cadre de la fusion de parties d'image d'empreinte.

La technique d'assemblage utilisée dans le procédé de reconstruction selon l'invention est particulièrement avantageuse. En effet, elle minimise les distorsions locales et n'utilise pas d'apriori entre les images ; en particulier elle n'utilise une partie d'image « seed » ou « graine » comme partie d'image de référence pour le recalage des autres parties d'image mais permet à chaque partie d'image d'être recalées selon le score d'association maximum.

Il aurait aussi été possible de calculer tous les scores d'association croisés entre les parties d'image, puis de sélectionner une meilleure partie d'image, choisie comme celle ayant le plus grand score d'association moyen avec toutes les autres parties d'image. On ajoute alors sur la meilleure partie d'image les parties d'image une à une, selon l'ordre défini par les scores d'association avec la meilleure partie d'image. On définit un seuil minimal en deçà duquel la confiance dans le recalage est trop faible pour que les parties d'image puissent être assemblées. Avec une telle méthode, les erreurs de recalage s'accumulent puisque les paramètres de la transformation ne sont pas ré-estimés à chaque étape avec la partie d'image nouvellement créée.

On peut facilement concevoir qu'en recalculant, à chaque itération, les scores d'association de la partie d'image nouvellement assemblée avec l'ensemble des parties d'image restantes, l'aspect visuel de l'image d'empreinte reconstruite sera bien meilleur, mais le résultat final restera très dépendant du choix de la meilleure partie d'image, et l'augmentation de la surface de l'image reconstruite restera limitée.

Au contraire, dans l'étape d'assemblage du procédé de reconstruction selon l'invention, on minimise les erreurs de recalage et on maximise la surface de l'image reconstruite.

Le procédé de reconstruction consiste ensuite à fusionner les parties d'image selon la carte d'assemblage pour reproduire l'image d'empreinte (étape E5).

Toutes les parties d'image sont fusionnées en même temps, au cours d'une seule opération, par moyenne pondérée des valeurs de niveaux de gris selon la distance aux bords des empreintes visibles dans les parties d'image.

La fusion comprend, pour chaque partie d'image, l'étape de pondérer une valeur de niveau de gris d'un pixel de ladite partie d'image par une distance dudit pixel à une limite d'une zone d'empreinte couverte par l'empreinte dans la partie d'image.

Une partie d'image contient en effet possiblement à la fois une zone d'empreinte et une zone de fond qui n'est pas couverte par l'empreinte et qui correspond à la surface d'acquisition du capteur non recouverte par le doigt. La limite de la zone d'empreinte est donc une limite de la partie d'image si celui-ci est entièrement recouvert par l'empreinte, ou bien une limite de la zone d'empreinte, séparant cette dernière d'une zone de fond, si la partie d'image contient de l'empreinte et du fond.

On nomme ainsi $I_1$, ..., $I_n$ les parties d'image à fusionner, qui sont recalées dans un même référentiel.

Pour chaque partie d'image, on calcule une transformée en distance dans la zone d'empreinte de ladite partie d'image.

On nomme $D_1$, ..., $D_n$ les images résultant des transformées en distance dans les parties d'image. Chaque pixel de ces images a pour valeur la distance euclidienne aux bords des zones d'empreinte.

On génère une image fusionnée K, qui reproduit l'image d'empreinte, en utilisant les formules : si

$$\sum_i D_i(x,y) = 0 \, , \; K(x,y) = \; 0,$$

sinon

$$K(x,y) = \frac{\sum_i I_i(x,y) * D_i(x,y)}{\sum_i D_i(x,y)},$$

où K(x,y) est une valeur d'un pixel de l'image fusionnée ayant pour coordonnées (x,y), $I_i(x,y)$ est une valeur d'un pixel de la partie d'image $I_i$ ayant pour coordonnées (x,y), et $D_i(x,y)$ est une valeur d'un pixel de la transformée de distance ayant pour coordonnées (x,y) dans la partie d'image $I_i$.

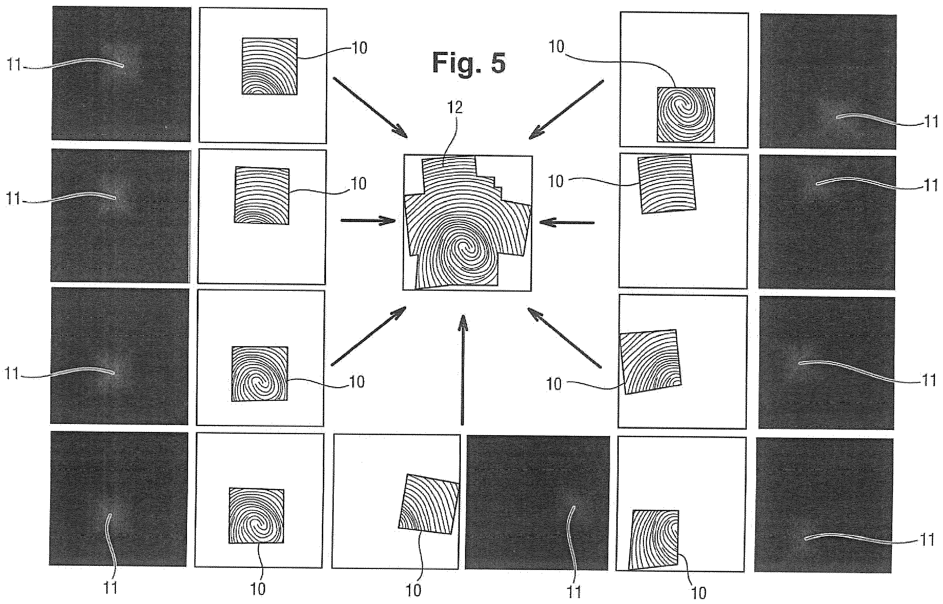

On illustre ce qui vient d'être dit en référence à la figure 5.

On observe les parties d'image 10 qui sont positionnées selon la carte d'assemblage.

On calcule les transformées en distance 11 de chaque partie d'image 10. Les positions relatives des transformées en distance 11 correspondent à celles des parties d'image 10 associées. On génère alors une image fusionnée qui reproduit l'image d'empreinte 12.

Cette méthode permet de donner plus de poids aux pixels centraux des parties d'image par rapport aux pixels situés sur les bords des parties d'image (ou des zones d'empreinte). Ceci est avantageux, car les pixels sur les bords sont susceptibles d'avoir subi une distorsion au moment de l'acquisition, ou bien de présenter des artefacts. Ces pixels s'alignent donc moins bien, ce qui peut entraîner un décalage des crêtes et des vallées. Au centre des zones de recouvrement, chaque partie d'image tend à avoir le même poids dans la fusion.

Il aurait aussi été possible de réaliser la fusion en utilisant l'une des méthodes suivantes.

On pourrait considérer que la valeur du pixel fusionné est simplement la moyenne ou la médiane des pixels des images recalées. On pourrait aussi calculer une carte de cohérence pour chacune des parties d'image alignées à fusionner : dans les zones de superposition des parties d'image, c'est la valeur du pixel de la partie d'image présentant la plus grande valeur de cohérence qui sera utilisée pour la fusion. Le problème de cette approche est qu'elle crée un artefact visuel de « trait » au niveau des frontières de recollement des régions sélectionnées dans l'une ou l'autre des deux parties d'image. Lorsque cette image « fusionnée » sera utilisée pour, de nouveau, extraire des points caractéristiques, de nombreux points viendront potentiellement se placer sur ces frontières artificielles. De plus, des distorsions au niveau des bords de l'empreinte sont visibles.

Il serait aussi possible de fusionner les parties d'image deux à deux, de manière incrémentale, ce qui a pour conséquence que la dernière partie d'image ajoutée aura plus de poids que la première, et que les possibles distorsions seront alors plus apparentes.

Ces méthodes sont cependant moins efficaces que la fusion qui vient d'être décrite et qui utilise les transformées en distance.

Préalablement à l'étape de fusion, on réalise avantageusement une première étape de correction destinée à éliminer des inhomogénéités d'illumination dans les parties d'image.

La première étape de correction comporte ici la mise en œuvre d'une égalisation adaptative d'histogramme avec limitation de contraste de type CLAHE (pour *Contrast-Limited Adaptive Histogram Equalization*). On réalise aussi, avantageusement, une deuxième étape de correction destinée à éliminer des zones de fond des parties d'image. Les zones de fond de chaque partie d'image sont détectées en estimant une variabilité locale des valeurs de niveau de gris des pixels sur une fenêtre glissante parcourant la partie d'image. Si la variabilité est trop faible (zone homogène), on considère que le pixel central dans la fenêtre glissante appartient au fond.

On peut aussi éliminer les artefacts d'acquisition en détectant des zones blanches qui ne sont pas des vallées.

Ces étapes de correction permettent de ne pas introduire d'artefact lors de la fusion et de créer une image réaliste.

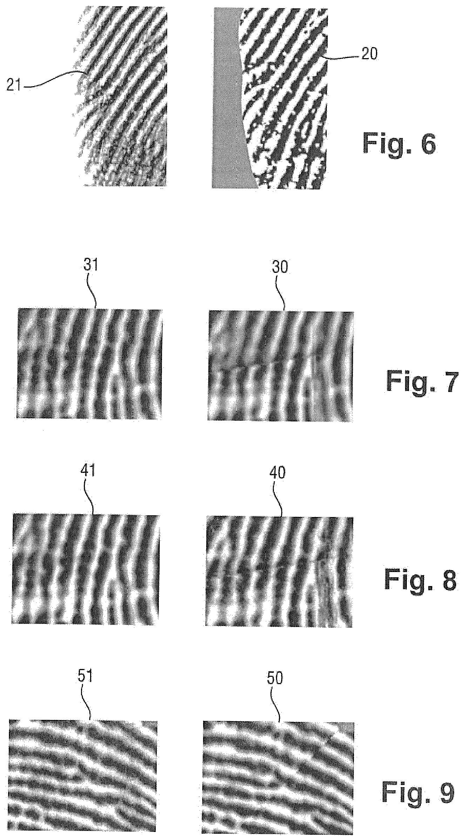

Ainsi, sur la figure 6, on constate que la partie d'image 20 corrigée par une égalisation adaptative d'histogramme et par détection et élimination du fond, est beaucoup plus nette et propre que la partie d'image source 21.

On voit sur les figures qui suivent que la fusion mise en œuvre dans le procédé de reconstruction selon l'invention est plus performante que les méthodes de fusion connues.

Ainsi, en référence à la figure 7, des parties d'image ont été fusionnées par le procédé de reconstruction selon l'invention, ainsi que par une méthode de fusion par moyenne. L'image d'empreinte reconstruite via la méthode de fusion par moyenne présente de nombreux artefacts, liés aux distorsions sur les bords des parties d'image, que ne présente pas le procédé de reconstruction selon l'invention.

On constate, dans la portion 30 de l'image d'empreinte reconstruite en utilisant une fusion par la méthode de fusion par moyenne, un décalage de l'alternance crêtes / vallées. Ce décalage est très largement atténué dans la portion 31 de l'image d'empreinte reconstruite par le procédé de reconstruction selon l'invention.

En référence à la figure 8, des parties d'image ont été fusionnées par le procédé de reconstruction selon l'invention, ainsi que par une méthode de fusion par médiane.

On constate à nouveau, dans la portion 40 de l'image d'empreinte reconstruite en utilisant une fusion par la méthode de fusion par médiane, un décalage de l'alternance crêtes / vallées. Ce décalage est très largement atténué dans la portion 41 de l'image d'empreinte reconstruite par le procédé de reconstruction selon l'invention.

En référence à la figure 9, des parties d'image ont été fusionnées par le procédé de reconstruction selon l'invention, ainsi que par une méthode de fusion par moyenne pondérée par la distance aux frontières de recollement. Une frontière est définie comme l'équidistante entre les bords (le masque) des fragments d'empreinte à fusionner.

La portion 50 de l'image d'empreinte reconstruite présente un artefact de recollement dans la fusion au niveau de la frontière. Cet artefact est très largement atténué dans la portion 51 de l'image d'empreinte reconstruite par le procédé de reconstruction selon l'invention.

Les performances du procédé de reconstruction selon l'invention sont donc particulièrement intéressantes.

Les performances du procédé de reconstruction selon l'invention ont été évaluées sur une base de 150 parties d'image acquises sur un petit capteur à 500 dpi, de dimension 9×9mm. En moyenne, sur les fragments d'image 9×9mm:

- 7.31 (/10) parties d'image sont fusionnées ;
- la surface de l'image après fusion s'accroit en étant multipliée par 2.3 ;
- 6(/150) parties d'image ne sont pas fusionnées (aucune association ne satisfait le critère de score d'association supérieur au seuil prédéterminé) ;
- 17 (/150) des images fusionnées présentent des défauts locaux d'alignement mineurs ;

- 2 (/150) des images fusionnées présentent des effets d'atténuation liés à la fusion avec du fond "blanc" rémanent non pris en compte lors de la fusion.

Les images ont aussi été arbitrairement rognées aux dimensions 9x4mm pour évaluer la capacité du procédé de reconstruction selon l'invention sur une surface encore plus réduite. En moyenne, sur les images 9x4mm :

- 8.5 (/20) parties d'images sont fusionnées ;
- la surface de l'image après fusion s'accroit en étant multipliée par 2.8 ;
- 1(/150) parties d'image ne sont pas fusionnées.

L'invention n'est pas limitée au mode de mise en œuvre particulier qui vient d'être décrit, mais, bien au contraire, couvre toute variante entrant dans le cadre de l'invention telle que définie par les revendications.

**Revendications**

1. Procédé de reconstruction d'au moins une image d'empreinte (12), représentative d'une empreinte papillaire, à partir d'un ensemble de plus de deux parties d'image (1, 2, 10) acquises grâce à au moins un capteur, le procédé de reconstruction comportant les étapes, réalisées par au moins une unité électrique de traitement, de :

   - extraire de chaque partie d'image de l'ensemble de parties d'image un jeu de points d'intérêts locaux (étape E1) , ledit jeu de points d'intérêts locaux caractérisant la partie d'image et, pour chaque point d'intérêt local, calculer un vecteur descripteur qui caractérise ledit point d'intérêt local ;
   - pour chaque couple de deux parties d'image, évaluer à partir des jeux de points d'intérêts locaux et des vecteurs descripteurs desdites deux parties d'image un score d'association représentatif d'une probabilité que les deux parties d'image soient contiguës sur l'image d'empreinte ;
   - assembler les parties d'image d'un meilleur couple, dont le score d'association est le plus élevé, pour former un fragment assemblé (étape E4) ;
   - réitérer les étapes ci-dessus en remplaçant à chaque fois, dans l'ensemble de parties d'image, les deux parties d'image du meilleur couple par le fragment assemblé, jusqu'à ce que tous les scores d'association des couples restants soient inférieurs ou égaux à un seuil prédéterminé, et produire ainsi une carte d'assemblage des parties d'image ;
   - fusionner les parties d'image selon la carte d'assemblage obtenue au cours des étapes d'assemblage pour reproduire l'image d'empreinte (étape E5).

2. Procédé de reconstruction selon la revendication 1, dans lequel l'étape de fusion comprend, pour chaque partie d'image (1, 2, 10), l'étape de pondérer une valeur de niveau de gris de chaque pixel de ladite partie d'image par une distance dudit pixel à une limite d'une zone d'empreinte couverte par l'empreinte papillaire dans la partie d'image.

3. Procédé de reconstruction selon la revendication 2, dans lequel l'étape de pondération comprend l'étape de calculer une transformée en distance (11) dans la zone d'empreinte de chaque partie d'image.

4. Procédé de reconstruction selon la revendication 3, dans lequel, à partir des parties d'image, on génère une image fusionnée qui reproduit l'image d'empreinte (12) en utilisant les formules : si

$$\sum_i D_i(x,y) = 0, \; K(x,y) = 0,$$

sinon

$$K(x,y) = \frac{\sum_i I_i(x,y) * D_i(x,y)}{\sum_i D_i(x,y)},$$

où K(x,y) est une valeur de niveau de gris d'un pixel de l'image fusionnée ayant pour coordonnées (x,y), $I_i$(x,y) est une valeur de niveau de gris d'un pixel de la partie d'image $I_i$ ayant pour coordonnées (x,y), et $D_i$(x,y) est une valeur de niveau de gris d'un pixel de la transformée de distance ayant pour coordonnées (x,y) dans la partie d'image $I_i$.

5. Procédé de reconstruction selon l'une des revendications précédentes, comportant en outre, préalablement à l'étape de fusion, une première étape de correction destinée à éliminer des inhomogénéités d'illumination dans les parties d'image (1, 2, 10).

6. Procédé de reconstruction selon la revendication 5, dans lequel la première étape de correction comporte la mise en œuvre d'une égalisation adaptative d'histogramme avec limitation de contraste.

7. Procédé de reconstruction selon l'une des revendications précédentes, comportant en outre, préalablement à la fusion, une deuxième étape de correction destinée à éliminer des zones de fond des parties d'image (1, 2, 10).

8. Procédé de reconstruction selon la revendication 7, dans lequel, dans la deuxième étape de correction, les zones de fond de chaque partie d'image (1, 2, 10) sont détectées en estimant une variabilité locale des valeurs de niveau de gris des pixels d'une fenêtre glissante définie dans la partie d'image.

9. Procédé de reconstruction selon l'une des revendications précédentes, comprenant en outre, suite à l'étape extraction, une étape d'association comportant les étapes d'associer deux par deux les parties d'image (étape E2), et de réaliser un recalage pour recaler les parties d'image associées deux par deux (étape E3).

10. Procédé de reconstruction selon la revendication 9, dans lequel l'étape d'association utilise un algorithme de *point wise matching* qui, notamment, calcule une distance euclidienne entre des vecteurs descripteurs des points caractéristiques des parties d'image.

11. Procédé de reconstruction selon la revendication 9, dans lequel l'étape de recalage met en œuvre une transformation rigide ou une homographie ou une transformation de type *Thin-Plate Splines.*

12. Procédé de reconstruction selon l'une des revendications précédentes, comportant en outre les étapes, préalables aux étapes d'assemblage, de prétraiter les parties d'images par une correction d'illumination, pour les rendre plus homogènes, et par une détection de fond et d'artefacts d'acquisition, pour éviter de fusionner des pixels non informatifs.

13. Procédé de reconstruction selon l'une des revendications précédentes, comportant en outre l'étape de vérifier l'absence de distorsions locales sur chaque fragment assemblé en utilisant une mesure de corrélation locale.

14. Unité électrique de traitement, dans laquelle est mis en œuvre un procédé de reconstruction selon l'une des revendications précédentes.

**Patentansprüche**

1. Verfahren zur Rekonstruktion mindestens eines Abdruckbildes (12), das für einen Papillarlinienabdruck repräsentativ ist, aus einer Menge von mehr als zwei Bildausschnitten (1, 2, 10), die dank mindestens eines Sensors erfasst wurden, wobei das Verfahren zur Rekonstruktion die folgenden von mindestens einer elektrischen Verarbeitungseinheit durchgeführten Schritte umfasst:

- Extrahieren eines Satzes lokaler Punkte von Interesse aus jedem Bildausschnitt aus der Menge von Bildausschnitten (Schritt E1), wobei der Satz lokaler Punkte von Interesse den Bildausschnitt charakterisiert, und, für jeden lokalen Punkt von Interesse, Berechnen eines Deskriptorvektors, der den lokalen Punkt von Interesse charakterisiert;
- für jedes Paar von zwei Bildausschnitten, Evaluieren einer Zuordnungsbewertung, die für eine Wahrscheinlichkeit repräsentativ ist, dass die beiden Bildausschnitte auf dem Abdruckbild zusammenhängend sind, aus den Sätzen von lokalen Punkten von Interesse und den Deskriptorvektoren der beiden Bildausschnitte;
- Zusammensetzen der Bildausschnitte eines besten Paares, dessen Zuordnungsbewertung am höchsten ist, um ein zusammengesetztes Fragment zu bilden (Schritt E4);
- Wiederholen der obigen Schritte, wobei in der Menge von Bildausschnitten jedes Mal die beiden Bildausschnitte des besten Paares durch das zusammengesetzte Fragment ersetzt werden, bis alle Zuordnungsbewertungen der verbleibenden Paare kleiner oder gleich einem vorbestimmten Schwellenwert sind, und dadurch Erzeugen einer Karte des Zusammensetzens der Bildausschnitte;
- Zusammenfügen der Bildausschnitte gemäß der in den Schritten zum Zusammensetzen erhaltenen Karte des Zusammensetzens, um das Abdruckbild zu reproduzieren (Schritt E5).

2. Verfahren zur Rekonstruktion nach Anspruch 1, wobei der Schritt des Zusammenfügens für jeden Bildausschnitt (1, 2, 10) den Schritt des Gewichtens eines Graustufenwerts eines jeden Pixels des Bildausschnitts durch einen Abstand des Pixels zu einer Grenze eines Abdruckbereichs, der durch den Papillarlinienabdruck in dem Bildausschnitt abgedeckt ist, umfasst.

3. Verfahren zur Rekonstruktion nach Anspruch 2, wobei der Schritt des Gewichtens den Schritt des Berechnens einer Distanztransformation (11) im Abdruckbereich jedes Bildausschnitts umfasst.

4. Verfahren zur Rekonstruktion nach Anspruch 3, wobei aus den Bildausschnitten ein zusammengefügtes Bild erzeugt wird, das das Abdruckbild (12) unter Verwendung der folgenden Formeln reproduziert: wenn

$$\Sigma_i D_i(x, y) = 0, K(x, y) = 0,$$

sonst

$$K(x, y) = \frac{\Sigma_i I_i(x,y) * D_i(x,y)}{\Sigma_i D_i(x,y)},$$

wobei $K(x,y)$ ein Graustufenwert eines Pixels des zusammengefügten Bildes ist, das die Koordinaten $(x,y)$ aufweist, wobei $I_i(x,y)$ ein Graustufenwert eines Pixels des Bildausschnitts $I_i$ ist, das die Koordinaten $(x,y)$ aufweist, und $D_i(x,y)$ ein Graustufenwert eines Pixels der Distanztransformation in dem Bildausschnitt $I_i$ ist, das die Koordinaten $(x,y)$ aufweist.

5. Verfahren zur Rekonstruktion nach einem der vorstehenden Ansprüche, ferner umfassend, vor dem Schritt des Zusammenfügens, einen ersten Korrekturschritt zum Beseitigen von Beleuchtungsinhomogenitäten in den Bildausschnitten (1, 2, 10).

6. Verfahren zur Rekonstruktion nach Anspruch 5, wobei der erste Korrekturschritt das Implementieren einer adaptiven Histogrammentzerrung mit Kontrastbegrenzung umfasst.

7. Verfahren zur Rekonstruktion nach einem der vorstehenden Ansprüche, ferner umfassend, vor dem Zusammenfügen, einen zweiten Korrekturschritt zum Beseitigen von Hintergrundbereichen der Bildausschnitte (1, 2, 10).

8. Verfahren zur Rekonstruktion nach Anspruch 7, wobei im zweiten Korrekturschritt die Hintergrundbereiche jedes Bildausschnitts (1, 2, 10) erkannt werden, indem eine lokale Variabilität der Graustufenwerte der Pixel eines in dem Bildausschnitt definierten gleitenden Fensters geschätzt wird.

9. Verfahren zur Rekonstruktion nach einem der vorstehenden Ansprüche, ferner umfassend, im Anschluss an den Schritt des Extrahierens, einen Zuordnungsschritt, der die Schritte des paarweisen Zuordnens der Bildausschnitte (Schritt E2) und des Durchführens einer Neueinstellung zum Neueinstellen der paarweise zugeordneten Bildausschnitte (Schritt E3) umfasst.

10. Verfahren zur Rekonstruktion nach Anspruch 9, wobei der Zuordnungsschritt einen *Point-Wise-Matching-Algorithmus* verwendet, der insbesondere eine euklidische Distanz zwischen Deskriptorvektoren für die charakteristischen Punkte der Bildausschnitte berechnet.

11. Verfahren zur Rekonstruktion nach Anspruch 9, wobei der Schritt des Neueinstellens eine starre Transformation oder eine Homographie oder eine Transformation vom Typ *Thin-Plate Splines* implementiert.

12. Verfahren zur Rekonstruktion nach einem der vorstehenden Ansprüche, ferner umfassend, vor den Schritten des Zusammensetzens, die Schritte des Vorverarbeitens der Bildausschnitte durch eine Beleuchtungskorrektur, um sie homogener zu machen, und durch eine Erkennung von Hintergrund und Erfassungsartefakten, um zu vermeiden, dass nicht-informative Pixel zusammengefügt werden.

13. Verfahren zur Rekonstruktion nach einem der vorstehenden Ansprüche, ferner umfassend den Schritt des Überprüfens des Nichtvorhandenseins von lokalen Verzerrungen auf jedem zusammengesetzten Fragment unter Verwendung einer lokalen Korrelationsmessung.

14. Elektrische Verarbeitungseinheit, wobei ein Verfahren zur Rekonstruktion nach einem der vorstehenden Ansprüche implementiert wird.

**Claims**

1. A method of reconstructing at least one print image (12), representative of a papillary print, from a set of more than two image portions (1, 2, 10) acquired by means of at least one sensor, the reconstruction method comprising the steps, carried out by at least one electrical processing unit, of:

    - extracting from each image portion of all image portions a set of local points of interest (step E1), said set of local points of interest characterizing the image portion and, for each local point of interest, calculating a descriptor vector that characterizes said local point of interest;
    - for each pair of two image portions, evaluating from the sets of local points of interest and from the descriptor vectors of said two image portions an association score representative of a probability that the two image portions are contiguous on the print image;
    - assembling the image portions of a better pair for which the association score is highest, in order to form an assembled fragment (step E4);
    - repeating the steps above, each time replacing, in all the image portions, the two image portions of the better pair with the assembled fragment, until all the association scores of the remaining pairs are less than or equal to a predetermined threshold, and thus producing an assembly map of the image portions;
    - merging the image portions according to the assembly map obtained during the assembly steps in order to reproduce the print image (step E5).

2. The reconstruction method according to claim 1, wherein the merger step comprises, for each image portion (1, 2, 10), the step of weighting a graylevel value of each pixel of said image portion by a distance of said pixel to a boundary of a print area covered by the papillary print in the image portion.

3. The reconstruction method according to claim 2, wherein the weighting step comprises the step of calculating a distance transform (11) in the print area of each image portion.

4. The reconstruction method according to claim 3, wherein, starting from the image portions, a merged image is generated that reproduces the print image (12) by using the formulas: if

$$\Sigma_i D_i(x, y) = 0, K(x, y) = 0,$$

else

$$K(x, y) = \frac{\Sigma_i I_i(x,y) * D_i(x,y)}{\Sigma_i D_i(x,y)},$$

where K(x,y) is a gray level value of a pixel of the merged image having the coordinates (x,y), $I_i$(x,y) is a gray level value of a pixel of the image portion $I_i$ having the coordinates (x,y), and $D_i$(x,y) is a gray level value of a pixel of the distance transform having the coordinates (x,y) in the image portion $I_i$.

5. The reconstruction method according to one of the preceding claims, further comprising, prior to the merging step, a first correction step intended to eliminate illumination inhomogeneities, in the image portions (1, 2, 10).

6. The reconstruction method according to claim 5, wherein the first correction step comprises the implementation of an adaptive histogram equalization with contrast limitation.

7. The reconstruction method according to one of the preceding claims, further comprising, prior to the merger, a second correction step intended to eliminate background areas of the image portions (1, 2, 10).

8. The reconstruction method according to claim 7, wherein, in the second correction step, the background areas of each image portion (1, 2, 10) are detected by estimating a local variability of the gray level values of the pixels from a sliding window defined in the image portion.

9. The reconstruction method according to one of the preceding claims, further comprising, following the extraction step, an association step comprising the steps of associating the image portions two by two (step E2), and carrying out a resetting in order to reset the image portions associated two by two (step E3).

10. The reconstruction method according to claim 9, wherein the association step uses a point-wise matching algorithm which, in particular, calculates a Euclidean distance between descriptor vectors of the characteristic points of the image portions.

11. The reconstruction method according to claim 9, wherein the resetting step carries out a rigid transformation or a homography or a thin-plate spline transformation.

12. The reconstruction method according to one of the preceding claims, further comprising the steps, prior to the assembly steps, of preprocessing the image portions by an illumination correction to make them more homogeneous, and by detecting background and acquisition artifacts in order to avoid merging non-informative pixels.

13. The reconstruction method according to one of the preceding claims, further comprising the step of verifying the absence of local distortions on each assembled fragment by using a local correlation measurement.

14. An electrical processing unit, wherein a reconstruction method according to one of the preceding claims is implemented.

Fig. 1

Fig. 2

**Fig. 3**

| TABLEAU 1 | A | B | C | D | E | F | G |
|---|---|---|---|---|---|---|---|
| A | - | 10 | 5 | 8 | 25 | 30 | 0 |
| B | | - | 60 | 10 | 7 | 15 | 1 |
| C | | | - | 15 | 5 | 6 | 2 |
| D | | | | - | 10 | 15 | 0 |
| E | | | | | - | 50 | 3 |
| F | | | | | | - | 0 |

| TABLEAU 2 | A | B-C | D | E | F | G |
|---|---|---|---|---|---|---|
| A | - | 10 | 8 | 25 | 30 | 0 |
| B-C | | - | 20 | 8 | 15 | 1 |
| D | | | - | 10 | 15 | 0 |
| E | | | | - | 50 | 3 |
| F | | | | | - | 0 |

| TABLEAU 3 | A | B-C | D | E-F | G |
|---|---|---|---|---|---|
| A | - | 10 | 8 | 55 | 0 |
| B-C | | - | 20 | 18 | 1 |
| D | | | - | 35 | 0 |
| E-F | | | | - | 3 |

| TABLEAU 4 | A-E-F | B-C | D | G |
|---|---|---|---|---|
| A-E-F | - | 18 | 35 | 3 |
| B-C | | - | 20 | 1 |
| D | | | - | 0 |

| TABLEAU 5 | D-A-E-F | B-C | G |
|---|---|---|---|
| D-A-E-F | - | 20 | 3 |
| B-C | | - | 1 |

**Fig. 4**

Fig. 5

21 — 20

**Fig. 6**

31        30

**Fig. 7**

41        40

**Fig. 8**

51        50

**Fig. 9**

**RÉFÉRENCES CITÉES DANS LA DESCRIPTION**

**Littérature non-brevet citée dans la description**

- **SHAH et al.** Fingerprint Mosaicing Using Thin Plate Splines. *The biometric consortium conférence,* 2005